# EUROPÄISCHE PATENTSCHRIFT

(11) **EP 2 529 169 B1**
(45) Veröffentlichungstag und Bekanntmachung des Hinweises auf die Patenterteilung: **13.03.2019**
(21) Anmeldenummer: 11701659.2
(22) Anmeldetag: 26.01.2011
(51) Int. Cl.: F26B 15/14, F26B 23/00, F26B 23/02

(54) **TROCKNUNGSANLAGE UND TROCKNUNGSVERFAHREN MIT WÄRMEKRAFTMASCHINE**
DRYING SYSTEM AND DRYING METHOD COMPRISING A THERMAL ENGINE
SYSTÈME ET PROCÉDÉ DE SÉCHAGE À MOTEUR THERMIQUE

(30) Priorität: 26.01.2010 DE 102010001234
(43) Veröffentlichungstag der Anmeldung: 05.12.2012
(73) Patentinhaber: Dürr Systems AG, 74321 Bietigheim-Bissingen (DE)
(72) Erfinder: WESCHKE, Jürgen, 71263 Weil der Stadt (DE); WIELAND, Dietmar, 71336 Waiblingen (DE); JOST, Jürgen, 71679 Asperg (DE)
(74) Vertreter: Gauss, Nikolai
(86) Internationale Anmeldenummer: PCT/EP2011/051094
(87) Internationale Veröffentlichungsnummer: WO 2011/092224

(56) Entgegenhaltungen:
- EP-A1- 0 566 304
- EP-A1- 1 790 928
- EP-A2- 1 068 802
- DE-A1-102007 051 034
- DE-B3-102004 051 975

## Beschreibung

Die Erfindung betrifft eine Anlage mit einer temperierbaren Trocknerkabine zum Aufheizen von Werkstücken, insbesondere von metallischen Werkstücken, insbesondere von Fahrzeugkarossen, mit einer Heizeinrichtung zum Erhitzen von Zuluft für die Trocknerkabine und mit einer Wärmekraftmaschine, die mit einem Verbraucher bewegungsgekoppelt ist, um von der Wärmekraftmaschine mechanische Energie auf den Verbraucher zu übertragen, wobei die Heizeinrichtung wenigstens einen mit dem heißen Abgas einer Wärmekraftmaschine beaufschlagten Wärmetauscher enthält, der dem heißen Abgas Wärme entzieht, um damit der Trocknerkabine zugeführte Zuluft zu erhitzen. Darüber hinaus betrifft die Erfindung ein Verfahren für das Betreiben einer solchen Anlage.

Eine Anlage und ein Verfahren der eingangs genannten Art sind aus der EP 0 566 304 A1 bekannt. Dort ist das Aufheizen und Trocknen von Werkstücken beschrieben, die mittels eines Förderbands in einer Trocknungskammer bewegt werden. Mit den lösemittelhaltigen Dämpfen aus der Trocknungskammer wird eine Brennkraftmaschine befeuert, deren Abwärme in einem Wärmetauscher auf Frischluft übertragen wird. Die auf diese Weise aufgeheizte Frischluft wird dann der Trocknungskammer für das Aufheizen und Trocknen der Werkstücke zugeführt.

In der EP 1 302 737 B1 ist eine Lackier- bzw. Beschichtungsanlage für Kraftfahrzeugkarossen beschrieben, die ein Trocknermodul mit einer Aufheizkabine für das Trocknen von frisch lackierten oder beschichteten Fahrzeugkarossen enthält. Hierzu kann in dem Trocknermodul mittels eines Gebläses Heißluft umgewälzt werden. Die umgewälzte Heißluft wird in einem Wärmetauscher erwärmt.

Die EP 1 790 928 A1 offenbart ein Verfahren und eine Vorrichtung für das Beschichten und darauffolgende Trocknen von Spulen. Das Trocknen der Spulen erfolgt mittels Infrarotstrahlung aus Strahlern, die mit in einem RTO-Prozess durch Oxidieren von Lösemittel vorgewärmter Luft gekühlt werden, das beim Trocknen der Spulen freigesetzt wird.

Um einen zuverlässigen Betrieb von industriellen Anlagen und Fertigungsstraßen, insbesondere in der Automobilproduktion zu gewährleisten, müssen darin vorgesehene Steuerungen und Antriebe ununterbrochen mit elektrischer Energie versorgt werden. U. a. in den sogenannten Entwicklungs- und Schwellenländern ist dies nicht ohne weiteres sichergestellt. Dort kommt es bisweilen zu einem Ausfall von Versorgungseinrichtungen oder Verteilungsnetzen für elektrische Energie. Hier werden deshalb in den Stromversorgungseinrichtungen von Produktionsanlagen Notstromaggregate oder Systeme für das Speichern von elektrischer Energie vorgehalten, damit auch bei einem Zusammenbruch der Netzspannung der Produktionsbetrieb aufrechterhalten werden kann.

Aufgabe der Erfindung ist es, eine Anlage mit einer temperierbaren Trocknerkabine zum Aufheizen von Werkstücken bereitzustellen, die auch bei vorübergehender Trennung der Anlage von einem öffentlichen Stromversorgungsnetz zuverlässig und kostengünstig betrieben werden kann und/oder bei der ein Gesamtwirkungsgrad der Anlage erhöht bzw. optimiert werden kann, und ein Verfahren für das Betreiben eines solchen Anlage anzugeben.

Diese Aufgabe wird durch die in Anspruch 1 angegebene Anlage und das in Anspruch 7 angegebene Verfahren gelöst.

Der Erfindung liegt die Erkenntnis zugrunde, dass die Enthalpie des Abgases einer Wärmekraftmaschine, insbesondere einer Brennkraftmaschine zur exothermen Verbrennung eines Gas-Luft-Gemisches, die für den Antrieb eines elektrischen Generators mit einigen Megawatt an Leistung ausgelegt ist, eine beachtliche Wärmemenge im Abgas aufweist. Erfindungsgemäß ist die Wärmeleistung der genannten Wärmekraftmaschine im Nennbetrieb bevorzugt auf einen Wert zwischen 1 MW und 8 MW eingestellt, während die installierte elektrische Leistung des elektrischen Generators (oder eines anderen Verbrauchers) auf ca. 2 MW bis 10 MW eingestellt wird. Die genannte Wärmeleistung wird erfindungsgemäß bevorzugt zu einer Aufheizung von 1500 kg Stahl von Umgebungstemperatur auf eine Bearbeitungs- oder Behandlungstemperatur im Bereich zwischen 130 °C und 200 °C genutzt. Die genannte Masse an Stahl entspricht beispielsweise einer Anzahl von ca. dreißig Kraftfahrzeugkarossen aus Stahlblech mit einem Gewicht von jeweils etwa 500 kg. Bei einer Taktzeit von ungefähr dreißig Einheiten pro Stunde können die Kraftfahrzeugkarossen unter Verwendung der aus dem Abgas entnehmbaren Wärmeleistung in einer Kabine auf eine (Trocknungs-)Temperatur im Bereich zwischen 130 °C und 200 °C erwärmt werden. Für das Trocknen der genannten Fahrzeugkarossen wird erfindungsgemäß eine Brutto-Wärmeleistung vorgehalten, die bevorzugt etwa zwischen 3,6 MW und 6 MW liegt und mit einem Gesamt-Wirkungsgrad von ca. 0,05 bis 0,1 auf die Karossen übertragen wird.

Vor diesem Hintergrund besteht eine Grundidee der Erfindung darin, als Heizeinrichtung für Heißluft in einer Anlage zum Trocknen und/oder Temperieren von metallischen Werkstücken, insbesondere Karossen, eine Wärmekraftmaschine einzusetzen, vorzugsweise eine Wärmekraftmaschine in Form eines Gasmotors oder einer Gasturbine. Erfindungsgemäß wird der Gasmotor mit einem homogen gasförmigen Brenngas-Luft-Gemisch betrieben, wobei das Brenngas insbesondere bei Normbedingungen gasförmige Kohlenwasserstoffe (z. B. Methan, Butan, Erdgas usw.) sind, die mit Frischluft in einem optimalen Verhältnis gemischt werden. Alternativ werden Kohlenwasserstoffhaltige Abgase aus entsprechenden Quellen einer Produktionsanlage abgezogen und mit Frischluft und/oder mit Brenngas angereichert, um so eine gewünschte Gemischaufbereitung zu realisieren. Des Weiteren ist ein erfindungsgemäßer Gasmotor insbesondere als Viertakt- oder ZweitaktMotor ausgeführt, wobei der Verbrennungsprozess im Motor nach dem Otto-Verfahren, dem Diesel-Verfahren oder dem Seiliger-Verfahren gestaltet sein kann. In analoger Weise kann eine erfindungsgemäße Gasturbine betrieben werden.

Mit einer von einem elektrischen Generator bereitgestellten elektrischen Leistung können dann nämlich die elektrischen Verbraucher in einer für ungefähr 30 Karosseneinheiten ausgelegten Trocknungsanlage zuverlässig betrieben werden, z. B. Antriebe von Fördervorrichtungen und Gebläse, aber auch elektrische Steuerungen. Mit der Erfindung lässt sich insbesondere ausnützen, dass wenn Karossen durch die Anlage mit niedriger Taktzeit bewegt werden, entsprechend weniger elektrische Leistung für die Verbraucher in der Anlage vorgehalten werden muss. Die erfindungsgemäße Anlage zum Trocknen ermöglicht somit das Trocknen von Fahrzeugkarossen mit ungemein hoher Energieeffizienz. Darüber hinaus können mit einem Generator der Anlage auch weitere elektrische Verbraucher in einem Produktionsbetrieb mit elektrischer Energie versorgt werden, wie z. B. Steuerungen und Antriebe in einer Lackier- bzw. Beschichtungsanlage.

Günstig für die Energiebilanz der Anlage ist auch, wenn diese einen Wärmeträgerfluidkreislauf mit einem Wärmetauscher für das Erhitzen von der Trocknerkabine zugeführter Frischluft aufweist.

In einer erfindungsgemäßen Anlage kann dem heißen Abgas der Wärmekraftmaschine die Wärme insbesondere auch direkt in einem Wärmetauscher entzogen werden, der die Zuluft der z. B. als Trocknerkabine ausgebildeten Kabine erwärmt und der Kabine ohne weitere Behandlung zuführt. Günstig ist es in diesem Fall, mehrere Wärmetauscher vorzusehen, die nach Art einer Kaskade von dem heißen Abgas der Wärmekraftmaschine durchströmt werden und die Wärme auf die Zuluft der Kabine übertragen. Das durch die Wärmetauscher strömende Abgas der Wärmekraftmaschine kann darüber hinaus auch zu einem oder mehreren weiteren Wärmetauschern für das Erhitzen von der Kabine zugeführter Frischluft geführt werden. Mit der Wärme aus dem Abgas der Gasturbine lassen sich auch in einem Niedertemperaturbereich arbeitende Wärmeverbraucher mit Wärme versorgen. Hierzu wird das Abgas der Gasturbine zu einem oder mehreren weiteren Wärmetauschern für das Übertragen der Wärme des Abgases auf einen Wärmeträgerfluidkreislauf geführt, z. B. auf einen Wärmeträgerfluidkreislauf mit Wasser als Wärmeträgerfluid. Um hier eine ausreichende Abgasströmung zu gewährleisten, ist es von Vorteil, wenn diesem wenigstens einen weiteren Wärmetauscher das Abgas der Wärmekraftmaschine durch ein Gebläse zugeführt wird.

Außerdem ist es günstig, einem Generator in der Anlage einen Pufferspeicher (Akkumulator o.ä.) für das Puffern von elektrischer Energie zuzuordnen.

Dann können insbesondere Steuerungen und Antriebe der Anlage ohne gleichzeitiges Aufheizen von Heißluft für die Trocknerkabine mit Strom versorgt werden.

Indem der Wärmekraftmaschine eine lösemittelhaltige, mit Kohlenwasserstoffen angereicherte Abluft aus der Kabine als Brenngas zugeführt wird, kann diese Abluft durch Verbrennen entsorgt und dabei gleichzeitig zur Energieerzeugung eingesetzt werden. Erfindungsgemäß kann die Wärmekraftmaschine auch mit Abluft aus einer Lackierstation in einer Lackieranlage betrieben werden. Die Anlage zum Aufheizen kann insbesondere auch mehrere dezentral angeordnete Wärmekraftmaschinen enthalten, die einen oder mehrere Verbraucher von mechanischer Energie antreiben, wie z. B. Gebläse, Generatoren oder auch Kompressoren. Die erfindungsgemäße Anlage ist insbesondere zum Einsatz in einer Lackieranlage für Kraftfahrzeuge oder Kraftfahrzeugteile geeignet.

Im Folgenden wird die Erfindung anhand der Zeichnungen näher erläutert.

Es zeigen:
- Fig. 1: eine erste Anlage zum Trocknen von Fahrzeugkarossen mit einer Wärmekraftmaschine;
- Fig. 2: eine zweite Anlage zum Trocknen von Fahrzeugkarossen;
- Fig. 3: eine Wärmekraftmaschine mit einem Generator und einem Strom-und Wärmespeicher in einer Anlage zum Trocknen von Fahrzeugkarossen;
- Fig. 4: eine Lackieranlage mit einer Anlage zum Trocknen von Fahrzeugkarossen; und
- Fig. 5: eine weitere Anlage zum Trocknen von Fahrzeugkarossen, die mehrere Wärmekraftmaschinen enthält.

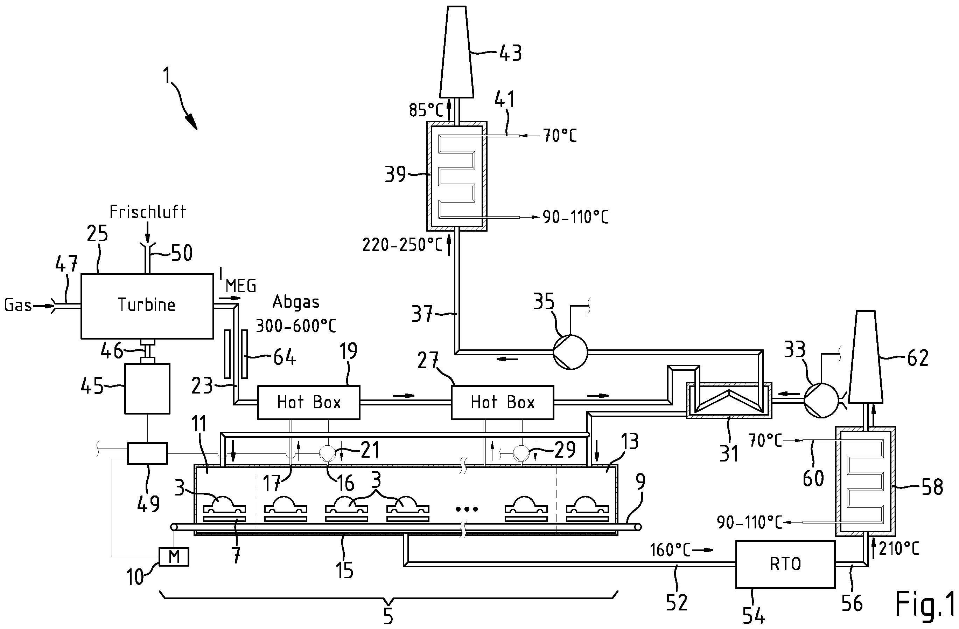

Die in Fig. 1 gezeigte Anlage 1 zum Trocknen von Werkstücken ist insbesondere für Fahrzeugkarossen 3 (oder Teilen davon) ausgelegt und weist eine als Trocknertunnel 5 bzw. Trocknerkabine ausgebildete Kabine auf. Der Trocknertunnel 5 weist einen erheblichen Wärmebedarf auf, so dass dem Trocknertunnel sensible Wärme von außen auf einem bestimmten, gegenüber Umgebungsbedingungen deutlich erhöhten Temperaturniveau zugeführt werden muss. Die Erfindung wird daher beispielhaft anhand einer Anlage zum Trocknen von Kfz-Karossen beschrieben. In modifizierten Ausführungsbeispielen ist eine erfindungsgemäße Anlage zum Temperieren, Trocknen, Härten und/oder Bestrahlen, insbesondere aber zum Aufheizen von größeren metallischen Bauelementen vorgesehen. Als Bauelemente kommen neben Kraftfahrzeugkarosserien (oder Teilen davon) andere großvolumige Systeme mit vergleichsweise großer Wärmekapazität in Frage, die einer Behandlung unterzogen werden, welche einen gesteigerten Wärmebedarf aufweist. Entsprechend können nach der erfindungsgemäßen Lehre der sogenannte Trockner, die sogenannte Trocknerkabine bzw. der Trocknertunnel beliebige Aufgaben mit Wärmebedarf übernehmen, ohne von der erfindungsgemäßen Lehre abzuweichen.

Durch den Trocknertunnel 5 können die Fahrzeugkarossen 3, die auf Skids 7 montiert sind, mittels einer Fördervorrichtung 9 bewegt werden. Dabei wird mechanische Energie verbraucht. Die Fördervorrichtung 9 hat einen elektrischen Antrieb 10. Der Antrieb 10 ist ein elektrischer Energieverbraucher in der Anlage 1. Der Trocknertunnel 5 hat eine Eingangsschleuse 11 und eine Ausgangsschleuse 13. Der Trocknertunnel 5 umfasst einen Trocknungsabschnitt 15, der zwischen der Eingangsschleuse 11 und der Ausgangsschleuse 13 liegt. Der Trocknungsabschnitt 15 ist bevorzugt so ausgelegt, dass darin etwa fünfzehn frisch mit einem Lack und/oder einem Lösemittel enthaltenden Substrat beschichtete Fahrzeugkarossen 3 mehr oder weniger gleichzeitig getrocknet werden können. Hierzu wird der Trocknungsabschnitt 15 z. B. mit der Länge L = 40 m, einer lichten Breite b mit 1,40 m < b < 1,60 m und einer lichten Höhe h mit 2,60 m < h < 2,00 m ausgelegt. Bei einem besonders bevorzugten Ausführungsbeispiel ergibt sich bei einem Taktabstand von 5,2 m, dreißig Einheiten pro Std. und 0,5 Std. Verweilzeit eine Tunnellänge von 78 m (Breite b außen: 3 m bis 4,6 m, Höhe h außen: 2,8 m bis 3,3 m).

Um eine Fahrzeugkarosse zu trocknen, die mit einem Lack und/oder einem Substrat frisch überzogen ist, muss diese je nach Art des Lacks oder des Substrats etwa 30 min bei einer Temperatur T, die im Bereich zwischen 130°C < T < 200 °C liegt, üblicherweise in einem Temperaturbereich zwischen 140 °C < T < 175 °C, getrocknet werden. Die Trocknungstemperatur für eine kathodische Tauchlackierung beträgt z. B. 180 °C, für eine Füller-Lackierung 160 °C und für Dicklack 140 °C. Die für das Trocknen einer Fahrzeugkarosse erforderliche Wärmemenge ist dabei durch die Wärmemenge bestimmt, die in das Stahlblech einer Fahrzeugkarosse während einer Aufheizzeit von 15 min eingetragen werden muss, damit sich diese auf die Trocknungstemperatur erwärmt. Da das Gewicht des in einer Fahrzeugkarosse verarbeiteten Stahlblechs üblicherweise in der Größenordnung von 500 kg liegt, wird zum Trocknen von Lack oder Substrat an einer frisch beschichteten Fahrzeugkarosse eine Wärmemenge benötigt, die etwa 36 MJ beträgt. Zur Trocknung und/oder Vernetzung für gängige Lacke ist anschließend an die erwähnte Aufheizzeit bevorzugt eine Zeitspanne von 15 min Aufenthalt bei Trocknungstemperatur T vorgesehen.

In der Eingangsschleuse 11 und der Ausgangsschleuse 13 werden die Fahrzeugkarossen 3 durch eine Gasatmosphäre bewegt, die erwärmte Frischluft enthält. Demgegenüber befinden sich die Fahrzeugkarossen 3 in dem Trocknungsabschnitt 15 des Trocknertunnels 5 in einer Heißluftatmosphäre mit umgewälzter Heißluft. Die Temperatur der Heißluft entspricht hier der erforderlichen Trocknungstemperatur für Lack und/oder Substrat an einer Fahrzeugkarosse 3. Um eine gleichmäßige Trocknungstemperatur für den Lack oder das Substrat an der Oberfläche einer Fahrzeugkarosse 3 zu gewährleisten, wird die Heißluftatmosphäre im Trocknertunnel 5 mit einer definierten Strömung umgewälzt. Hierfür hat der Trocknertunnel 5 Ein- und Auslassöffnungen 16, 17 für Zuluft in Form von Heißluft, die mit einem Wärmetauscher 19 verbunden sind. Die Einlassöffnungen 16 im Trocknertunnel sind in einem Aufheizbereich bevorzugt mit Düsen gestaltet. Weiter bevorzugt sind in einem anschließenden Haltebereich Einlassöffnungen ohne Düsen vorgesehen.

Dem Wärmetauscher 19 ist ein Gebläse 21 zugeordnet, das abgekühlte Heißluft über eine oder mehrere Auslassöffnungen 17 durch den Wärmetauscher 21 ansaugt und über eine oder mehrere Düsen 16 in den Trocknertunnel 5 wieder dem Trocknertunnel 5 zuführt. Der Wärmetauscher 19 ist an die Abgasleitung 23 einer Wärmekraftmaschine 25 angeschlossen. Die Wärmekraftmaschine 25 ist eine Gasturbine, z. B. die Gasturbine Typ SGT-400 aus dem Hause Siemens oder die Gasturbine Typ LM 1600 aus dem Hause General Electric. Anstelle einer Gasturbine ist es jedoch auch möglich, in der Anlage 1 Gasmotoren oder auch eine andere Brennkraftmaschine einzusetzen. Für den Einsatz in der Anlage 1 geeignet sind z. B. auch die Gasmotoren des Typs J616 GS der Baureihe 6 aus dem Hause Jenbacher Gasmotoren.

Die Wärmekraftmaschine 25 verbrennt ein Brenngas, das ihr über eine Leitung 47 zugeführt wird. Das dabei entstehende Abgas der Wärmekraftmaschine 25 wird dabei mit einer Temperatur T_{EG}, die zwischen 300 °C und 600 °C liegt, und einem Massestrom I_{MEG}, der mit 17 kg/s < I_{MEG} < 21 kg/s in die Abgasleitung 23 eingeströmt. Um ein gutes Strömungsverhalten für das Abgas in der Abgasleitung 23 zu gewährleisten, ist die Abgasleitung 23 bevorzugt als Heißrohr mit einem Rohrdurchmesser der Nennweite DN 800 ausgeführt.

In dem Wärmetauscher 19 wird Wärme aus dem Abgas der Wärmekraftmaschine 25 an die mittels des Gebläses 21 durch den Wärmetauscher 19 bewegte Heißluft für den Trocknertunnel 5 abgegeben. Aus dem Wärmetauscher 19 wird das Abgas der Wärmekraftmaschine 25 zu einem entsprechend dem Wärmetauscher 19 ausgebildeten weiteren Wärmetauscher 27 geführt. In dem Wärmetauscher 27 wird ebenfalls mittels eines Gebläses 29 in dem Trocknungsabschnitt des Trocknertunnels 5 umgewälzte Heißluft auf eine Trocknungstemperatur erwärmt.

Es ist natürlich möglich, für das Erwärmen von im Trocknertunnel 5 umgewälzter Heißluft auch eine Vielzahl von Wärmetauschern vorzusehen, durch die Abgas aus der Wärmekraftmaschine 25 geführt wird.

Aus dem Wärmetauscher 27 gelangt das Abgas der Gasturbine 25 zu einem Wärmetauscher 31 für Frischluft. Durch diesen Wärmetauscher 31 wird über ein Gebläse 33 Frischluft angesaugt. Diese erwärmte Frischluft ist zur Eingangsschleuse 11 und zur Ausgangsschleuse 13 des Trocknertunnels geführt. Ausgangsseitig des Wärmetauschers 31 für Frischluft gibt es ein weiteres Gebläse 35. Mit diesem Gebläse wird das bereits abgekühlte Abgas der Wärmekraftmaschine 25 mit Druck in eine Heißgasleitung 37 in einen als Abhitzekessel 39 ausgebildeten Wärmetauscher geblasen. In diesen Abhitzekessel 39 wird dann die Restwärme des Abgases an einen Heißwasserkreislauf 41 abgegeben. Der Heißwasserkreislauf 41 dient dazu, weitere Wärmeverbraucher mit Wärme zu versorgen, etwa eine sogenannte Vorbehandlungsstation in einer Lackieranlage, ein Heizungssystem für eine Halle mit Arbeitsplätzen oder ein Heizungssystem für Zu- bzw. Abluft.

Um eine günstige Strömung des Abgases der Wärmekraftmaschine 25 durch den Abhitzekessel 39 zu gewährleisten, ist diesem ein Kamin 43 zugeordnet. Durch den Kamin 43 wird das abgekühlte Abgas der Wärmekraftmaschine 25 an die Umgebung freigesetzt.

Der Trocknertunnel 5 ist über eine Abluft-Leitung 52 mit einem Reinigungsreaktor 54 für das thermisch regenerative Oxidieren von Lösemittel enthaltender Trockner-Abluft aus dem Trocknertunnel 5 verbunden. Bei diesem Reinigungsprozess wird die dem Reinigungsreaktor 54 zugeführte Trockner-Abluft erwärmt. Der Reinigungsreaktor 54 ist über eine Gasleitung 56 an einen als Abhitzekessel 58 ausgebildeten Wärmetauscher angeschlossen. In dem Abhitzekessel 58 wird die Wärme der im Reinigungsreaktor 54 gereinigten Abluft an einen Heißwasserkreislauf 60 abgegeben. Dieser Heißwasserkreislauf 60 dient dazu, weitere Wärmeverbraucher, die bei Niedertemperatur arbeiten, mit Wärme zu versorgen. Die durch den Abhitzekessel 58 strömende gereinigte Abluft aus dem Reinigungsreaktor 54 wird durch einen Kamin 62 an die Umwelt abgegeben. Diese Maßnahme gewährleistet ein gutes Strömungsverhalten für die Abluft in dem Abhitzekessel 58.

Um ein schnelles Anfahren der Anlage 1 zum Trocknen zu ermöglichen, ist in der Abgasleitung 23 zwischen der Wärmekraftmaschine 25 und dem Wärmetauscher 19 eine vorzugsweise mit fossilem Brennstoff befeuerbare Heizeinrichtung 64 vorgesehen.

Die Wärmekraftmaschine 25 ist über einen Anschluss 50 mit Frischluft versorgt. Sie arbeitet in guter Näherung entsprechend dem thermodynamischen Joule-Thomson-Prozess. Die mechanische Leistung der Wärmekraftmaschine 25 ist so ausgelegt, dass mit der Enthalpie des Abgases vorzugsweise bis zu 30 oder auch mehr Fahrzeugkarossen pro Stunde bei einer Trocknungstemperatur zwischen 130 °C und 200 °C in dem Trocknertunnel 5 getrocknet werden können. Eine solche Wärmekraftmaschine kann eine mechanische Leistung von etwa 12 MW bereitstellen.

Der Wärmekraftmaschine 25 ist ein Generator 45 zugeordnet. Hierzu ist die Wärmekraftmaschine 25 mit dem Generator 45 bewegungsgekoppelt. Ein an einem Antriebsstrang der Wärmekraftmaschine bereitgestelltes Drehmoment wird mittels einer drehbaren Welle 46 auf den Generator 45 übertragen. Bei Betrieb der Wärmekraftmaschine 25 erzeugt der Generator 45 elektrische Energie. Die mit der drehbaren Welle 46 in den Generator 25 eingeleitete mechanische Energie wird in dem Generator 45 verbraucht. Wie die Fördervorrichtung 9 ist der Generator 45 ein Verbraucher von mechanischer Energie in der Anlage 1. Der Generator 45 ist an ein Versorgungsmodul 49 angeschlossen. Über das Versorgungsmodul 49 versorgt der Generator 45 die elektrischen Verbraucher der Anlage 1 wie den elektrischen Antrieb 10 der Fördervorrichtung 9 und die Gebläse 21, 29, 33, 35 und entsprechende Steuereinrichtungen mit elektrischer Energie.

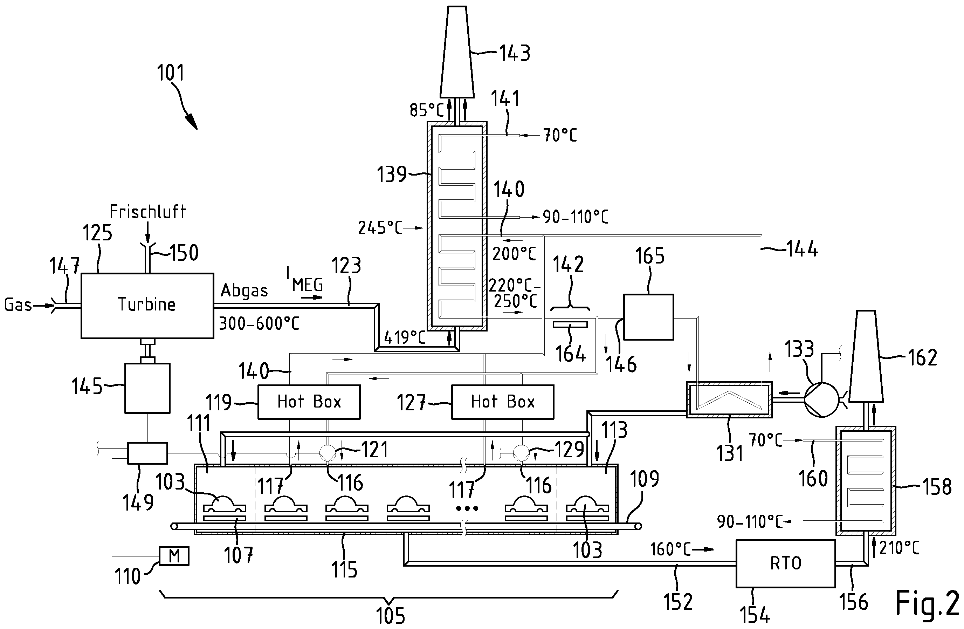

Die Fig. 2 zeigt eine Anlage 101 zum Trocknen von Fahrzeugkarossen 103 mit einem Trocknertunnel 105, der wie der Trocknertunnel 5 der Anlage 1 aus Fig. 1 ausgeführt ist. Auch der Aufbau der Fördereinrichtung 109 für das Bewegen der Fahrzeugkarossen 103 auf Fahrträgergerüsten 107 entspricht demjenigen in der Anlage 1. Für das Erwärmen der in dem Trocknungsabschnitt 115 des Trocknertunnels 105 umgewälzten Heißluft hat die Anlage 101 einen Wärmetauscher 119 und einen Wärmetauscher 127. Den Wärmetauschern 119, 127 sind entsprechende Gebläse 121, 129 zugeordnet, um die Heißluft durch Ein- und Auslassöffnungen 116, 117 in den Trocknertunnel 105 zu bewegen.

Anders als bei dem Wärmetauscher 119, 127 der Anlage 1 aus Fig. 1 sind jedoch die Wärmetauscher 119, 127 nicht direkt an die Abgasleitung 123 der Wärmekraftmaschine 125 angeschlossen, sondern in einem Kreislauf 140 mit Wärmeträgerfluid in Form von Heißwasser oder Thermoöl angeordnet. Im Vergleich zu der Anlage 1 aus Fig. 1 ermöglicht diese Maßnahme, dass weniger Heißrohr mit großem Rohrdurchmesser verbaut werden muss, um die Heißluft für den Trocknertunnel 105 mit Wärme aus dem Abgas der Wärmekraftmaschine 45 zu erwärmen. Das Wärmeträgerfluid in dem Kreislauf 140 transportiert hierzu die Wärme, die dem Abgas der Wärmekraftmaschine 125 entzogen wurde, zu den Wärmetauschern 119, 127, wo diese an die in dem Trockner 105 umgewälzte Heißluft abgegeben wird.

Um dem Abgas der Wärmekraftmaschine 125 Wärme zu entziehen, ist die Abgasleitung 123 an einen als Abhitzekessel 139 ausgebildeten Wärmetauscher angeschlossen. Dem Abhitzekessel 139 ist ein Kamin 143 zugeordnet. In dem Abhitzekessel 139 wird die Wärme aus dem Abgas der Wärmekraftmaschine 125 auf den Kreislauf 140 für Heißwasser übertragen. Um ein schnelles Anfahren der Anlage 101 zu ermöglichen, ist in einem Abschnitt 142 des Kreislaufs 140 eine mit fossilem Brennstoff befeuerbare Heizeinrichtung 164 vorgesehen. In dem Leitungsabschnitt 146 des Kreislaufs 144 gibt es einen Wärmespeicher 165. Bei einem Betrieb der Wärmekraftmaschine 125 wird in den Wärmespeicher 165 Wärme eingespeichert. Mit dieser eingespeicherten Wärme kann die durch den Wärmetauscher 131 strömende Frischluft erwärmt werden, wenn die Wärmekraftmaschine 125 bei lediglich geringer Leistung betrieben wird oder still steht.

Der Kreislauf 140 umfasst einen Leitungszweig 144, durch den die Wärme des Abgases der Wärmekraftmaschine 125 zu einem Wärmetauscher 131 transportiert werden kann. Dieser Wärmetauscher 131 dient wie der Wärmetauscher 31 in der Anlage 1 dazu, Frischluft zu erwärmen, die über ein Gebläse 133 zu der Eingangsschleuse 111 und der Ausgangsschleuse 113 des Trocknertunnels 105 geführt wird.

Der Abhitzekessel 139 ist darüber hinaus mit einem Kreislauf 141 für Heißwasser kombiniert, der wie der Kreislauf 41 in der Anlage 1 dazu dient, weitere Wärmeverbraucher in einem Niedertemperaturbereich mit Wärme zu versorgen, die dem Abgas der Gasturbine 25 entzogen wurde.

Außerdem ist der Trocknertunnel 105 in der Anlage 101 mit einem Reinigungsreaktor 154 für das Reinigen von Abluft kombiniert, dem wie bei dem Reinigungsreaktor 54 der Anlage 1 aus Fig. 1 ein Abhitzekessel 158 mit einem Heißwasserkreislauf 160 und einem Kamin 162 zugeordnet ist.

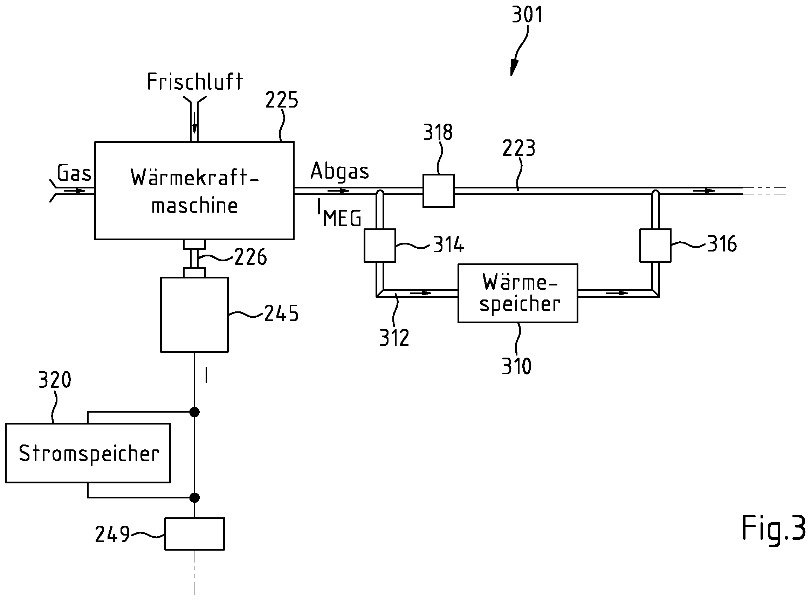

Die Wärmekraftmaschine 125 in der Anlage 101 treibt einen elektrischen Generator 145 an. Über ein Versorgungsmodul 149 werden mit dem Generator 145 wie bei der Anlage 1 aus Fig. 1 die elektrischen Verbraucher in der Anlage 101 mit elektrischer Energie versorgt. Die Fig. 3 zeigt eine Wärmekraftmaschine 225 in einer Anlage 301 zum Trocknen von Fahrzeugkarossen. Die Wärmekraftmaschine 225 kann insbesondere als Gasturbine oder Gasmotor oder auch als Dieselmotor ausgebildet sein. Auch die Wärmekraftmaschine 225 ist durch eine Welle 226 mit einem Generator 245 bewegungsgekoppelt. Der Wärmekraftmaschine 225 in der Anlage 301 ist ein als Pufferspeicher ausgebildeter Speicher 320 für elektrische Energie und ein Speicher 310 für Wärme zugeordnet. Der Speicher 310 für Wärme befindet sich in einer mittels steuerbaren Ventilen 314, 316 absperrbaren Bypassleitung 312. Die Bypassleitung 312 ist an einen Abschnitt der Abgasleitung 223 der Wärmekraftmaschine 225 angeschlossen, in dem ein steuerbares Absperrventil 318 angeordnet ist. Der Speicher 320 für elektrische Energie ist in eine elektrische Bypassleitung 322 geschaltet. Der Speicher 320 für elektrische Energie ermöglicht, die Energie aus mittels des Generators 245 erzeugten elektrischen Strom I zu speichern, wenn dieser den Bedarf der über das Versorgungsmodul 249 gespeisten Verbraucher in der Anlage überschreitet. Entsprechend kann durch Ansteuern der Ventile 314, 316, 318 mit dem Speicher 310 Wärme aus dem Abgas der Gasturbine 225 gespeichert werden, wenn in dem Abgas zur Verfügung stehende Wärmemenge per Zeit den Wärmebereich für das Betreiben der Trocknerkabine überschreitet. Im Übrigen entspricht der Aufbau der Anlage 301 dem Aufbau der Anlage 1 oder 101 aus Fig. 1 bzw. Fig. 2.

Die in Fig. 3 erläuterte Kombination eines Speichers 310 für Wärme und eines Speichers 320 für elektrische Energie mit der Gasturbine 225 ermöglicht, dass eine Anlage zum Trocknen von Fahrzeugen, wie sie in Fig. 1 oder Fig. 2 gezeigt ist, mit Wärme und elektrischer Energie versorgt werden kann, auch wenn die darin angeordnete Wärmekraftmaschine nicht arbeitet.

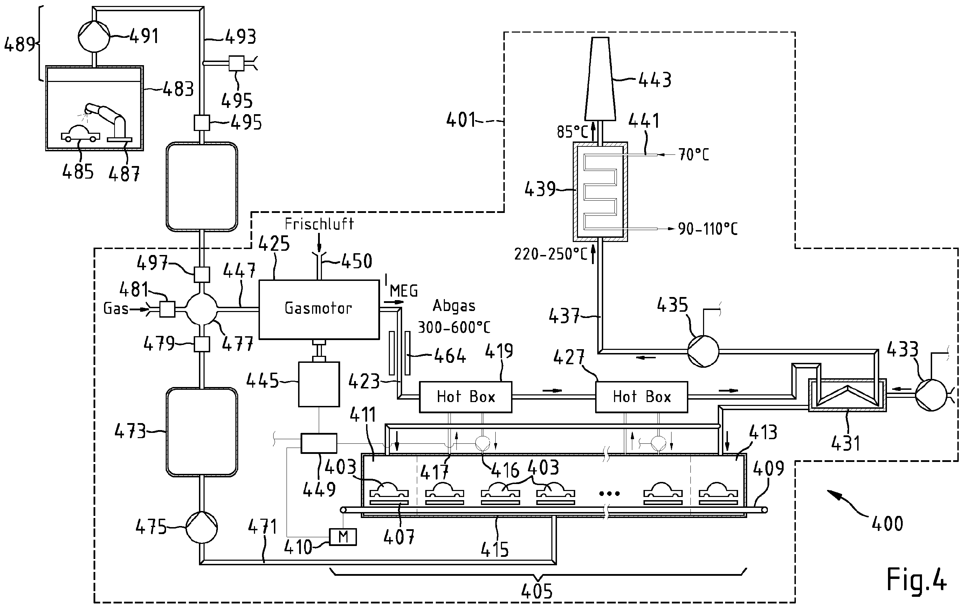

Die in Fig. 4 gezeigte Lackieranlage 400 enthält eine Anlage 401 zum Trocknen von Fahrzeugkarossen 403. In der Anlage 401 zum Trocknen von Fahrzeugkarossen gibt es eine Wärmekraftmaschine 425, die mit der Ablauft eines Trocknertunnels 405 als Brenngas betrieben werden kann. Soweit der Aufbau der Anlage 401 dem Aufbau der anhand der Fig. 1 beschriebenen Anlage 1 entspricht, sind Elemente in der Fig. 4, die in der Fig. 1 gezeigten Elementen entsprechen, mit im Vergleich zu der Fig. 1 um die Zahl 400 erhöhten Zahlen als Bezugszeichen kenntlich gemacht.

Die Anlage 401 einhält eine Abluftleitung 471, durch die mit Kohlenwasserstoffen angereicherte Abluft aus dem Trocknertunnel 405 der Wärmekraftmaschine 425 als Brenngas zugeführt werden kann. In der Abluftleitung 471 ist vorzugsweise ein Gasspeicher 473 angeordnet. In den Gasspeicher 473 kann die Abluft aus dem Trocknertunnel 405 mittels eines Kompressors 475 eingespeist werden. In der Anlage 401 gibt es eine Mischkammer 477, in der durch Einstellen von steuerbaren Ventilen 479, 481 der Wärmekraftmaschine 425 fossiles Brenngas mit der Abluft aus dem Trocknertunnel 405 vermischt werden kann.

Die Lackieranlage 400 enthält eine Lackierkabine 483. Die Lackierkabine 483 ist eine Lackierstation. In der Lackierkabine 483 können Fahrzeugkarossen 485 mit einem Lackierroboter 487 mit Sprühlack beaufschlagt werden. Die Lackierkabine 483 hat ein Absaugsystem 489 für Luft mit einem Gebläse 491. Die aus der Lackierkabine 483 abgesaugte Luft kann über ein Leitungssystem 493 mit Ventilen 495, 497 in die Mischkammer 477 eingeleitet werden. Diese Anordnung ermöglicht, dass die Wärmekraftmaschine 425 wahlweise mit Abluft aus dem Trocknertunnel 405, mit kohlenwasserstoffhaltiger Abluft aus der Lackierkabine 483 oder mit von außerhalb der Anlage 401 zugeführtem Brenngas oder mit einem Gasgemisch betrieben werden kann. Der Wärmekraftmaschine 425 können hier also die mit Kohlenwasserstoffen belasteten Abgase der Lackieranlage zugeführt werden. In der Wärmekraftmaschine 425 können diese Abgase verbrannt werden.

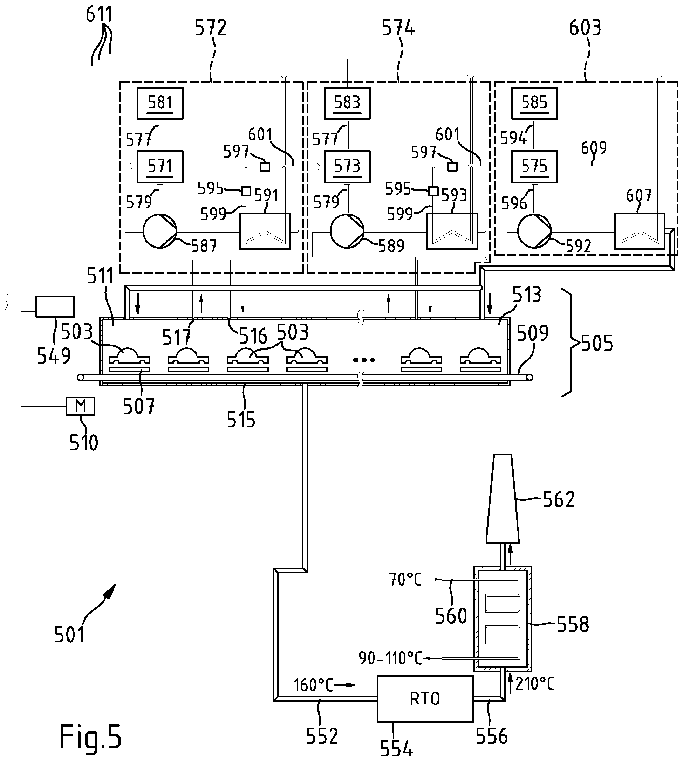

Die in Fig. 5 gezeigte Anlage 501 zum Trocknen von Fahrzeugkarossen 503 enthält mehrere Wärmekraftmaschinen in Form von Gasmotoren 571, 573, 575. Bei den Gasmotoren 571, 573, 575 kann es sich z. B. um den Gasmotor Typ E 2842 LE 322 oder den Gasmotor Typ E 2876 TE 302 aus dem Hause MAN handeln. Soweit der Aufbau der Anlage 501 dem Aufbau der anhand der Fig. 1 beschriebenen Anlage 1 entspricht, sind Elemente in der Fig. 5, die in der Fig. 1 gezeigten Elementen entsprechen, mit im Vergleich zu der Fig. 1 um die Zahl 500 erhöhten Zahlen als Bezugszeichen kenntlich gemacht.

Die Wärmekraftmaschinen 571, 573 sind in getrennten Hot-Box-Modulen 572, 574 angeordnet. Die Wärmekraftmaschinen 571, 573 sind in dem betreffenden Hot-Box-Modul 572, 574 über Antriebswellen 577, 579 jeweils mit einem Generator 581, 583 und mit einem Gebläse 587, 589 mechanisch gekoppelt. Die Gebläse 587, 589 dienen für das Umwälzen von Luft in dem Trocknertunnel 505. Die Gebläse 587, 589 bewegen die Luft aus dem Trocknertunnel 505 in den Hot-Box-Modulen 572, 574 durch einen Wärmetauscher 591, 593, der dort jeweils in der Nähe der Wärmekraftmaschine 571, 573 angeordnet ist. Ein jedes Hot-Box-Modul 572, 574 enthält zwei Steuerventile 595, 597. Durch einstellen der Steuerventile 595, 597 in den Hot-Box-Modulen 572, 574 kann das Abgas aus den Wärmekraftmaschinen wahlweise über einen Leitungsabschnitt 599 durch den Wärmetauscher 591, 593 geführt werden, um hierdurch die Umluft aus dem Trocknertunnel 505 zu erwärmen, oder über einen Leitungsabschnitt 601 direkt in den Trocknertunnel 505 geleitet werden.

Die Wärmekraftmaschine 575 ist in einem Modul 603 für das Erwärmen von Frischluft angeordnet, die dem Trocknertunnel 505 über ein Leitungssystem 605 zugeführt werden kann. In dem Modul 605 ist ein Generator 585 und ein Gebläse 592 angeordnet. Das Gebläse 592 und der Generator 585 sind mit der Wärmekraftmaschine 575 durch Antriebswellen 594, 596 bewegungsgekoppelt. Mit dem Gebläse 591 kann Frischluft angesaugt werden, um diese dem Trocknertunnel 505 zuzuführen. Für das Erwärmen der angesaugten Frischluft ist das Gebläse 592 an einen Wärmetauscher 607 angeschlossen. Der Wärmetauscher 607 wiederum ist über einen Leitungsabschnitt 609 mit der Wärmekraftmaschine 575 verbunden. Das Abgas der Wärmekraftmaschine 575 kann so über den Leitungsabschnitt 609 durch den Wärmetauscher 607 ins Freie geleitet werden. Hierdurch wird Wärme aus dem Abgas der Wärmekraftmaschine 575 auf die dem Trocknertunnel 505 zugeführte Frischluft übertragen.

Die Wärmekraftmaschinen 571, 573, 575 in der Anlage 501 haben jeweils einen Kühlkreislauf, der in der Fig. 5 nicht gezeigt ist. Dieser Kühlkreislauf dient für das kühlen der Brennkammern in der Wärmekraftmaschine 571m 573, 575. Mit der über den Kühlkreislauf freigesetzten Wärme der Wärmekraftmaschinen 571, 573, 575 können Wärmeverbraucher in einem Niedertemperaturbereich mit Wärme versorgt werden, die in der Fig. 5 nicht gezeigt sind.

Die in den Hot-Box-Modulen 572, 574 und dem Modul 603 für das Erwärmen von Frischluft angeordneten Generatoren 581, 583, 585 erzeugen elektrische Energie, die über elektrische Leitungen 611 dem Versorgungsmodul 549 in der Anlage 505 zugeführt wird.

## Patentansprüche

1. Anlage (1, 101, 401, 501) mit einer temperierbaren Trocknerkabine zum Aufheizen von Werkstücken, insbesondere Fahrzeugkarossen (3, 103, 403, 503), mit einer Heizeinrichtung zum Erhitzen von Zuluft für die Trocknerkabine und mit einer Wärmekraftmaschine (25, 125, 425, 571, 575), die mit einem Verbraucher (45, 145, 445, 587, 592) bewegungsgekoppelt ist, um von der Wärmekraftmaschine (25, 125, 425, 571, 575) mechanische Energie auf den Verbraucher (45, 145, 445, 587, 592) zu übertragen, wobei die Heizeinrichtung wenigstens einen mit dem heißen Abgas einer Wärmekraftmaschine (25, 125, 425, 571, 575) beaufschlagten Wärmetauscher (19, 27, 139, 419, 591, 607) enthält, der dem heißen Abgas Wärme entzieht, um damit der Trocknerkabine zugeführte Zuluft zu erhitzen, **gekennzeichnet durch** eine Lackieranlage (400) mit einer Lackierkabine (483) für das Beaufschlagen von Fahrzeugkarossen (485) mit Sprühlack, die ein Absaugsystem (489) für Luft mit einem Gebläse (491) aufweist, das über ein Leitungssystem mit Ventilen (495, 497) mit einer Mischkammer (477) verbunden ist, an welche die Wärmekraftmaschine (25, 125, 425, 571, 575) mit einer Brenngasleitung (447) angeschlossen ist, wobei der Mischkammer (477) mit Kohlenwasserstoffen belastete Abgase aus der Lackierkabine (483), Abluft aus der Trocknerkabine und von außerhalb zugeführtes Brenngas zuführbar sind, um damit die Wärmekraftmaschine (425) zu betreiben.

2. Anlage nach Anspruch 1, **dadurch gekennzeichnet, dass** die Mischkammer (477) mit der Trocknerkabine durch eine Abluftleitung (471) verbunden ist, in der ein Gasspeicher (473) angeordnet ist, in den die Abluft aus der Trocknerkabine mittels eines Kompressors (475) eingespeist werden kann.

3. Anlage nach Anspruch 1 oder 2, **dadurch gekennzeichnet, dass** die Wärmekraftmaschine als Gasturbine oder Gasmotor (425) ausgebildet ist.

4. Anlage nach einem der Ansprüche 1 bis 3, **dadurch gekennzeichnet, dass** der Verbraucher von mechanischer Energie als Generator (45, 145) zum Erzeugen von elektrischer Energie für einen elektrischen Verbraucher (10, 21, 29, 33, 110, 121, 129, 133) ausgebildet ist.

5. Anlage nach Anspruch 4, **dadurch gekennzeichnet, dass** der Generator (245) mit einem Pufferspeicher (320) für das Puffern von elektrischer Energie verbunden ist.

6. Anlage nach einem der Ansprüche 1 bis 5, **dadurch gekennzeichnet, dass** der Verbraucher von mechanischer Energie als Gebläse (587, 589, 592) für das Bewegen von Zuluft durch die Trocknerkabine ausgebildet ist.

7. Verfahren für das Betreiben einer Anlage (1, 101, 401, 501) mit einer temperierbaren Trocknerkabine zum Aufheizen von Werkstücken, insbesondere Fahrzeugkarossen (3, 103, 403, 503), mit einer Heizeinrichtung zum Erhitzen von Zuluft für die Tocknerkabine und mit einer Wärmekraftmaschine (25, 125, 425, 571, 575), die mit einem Verbraucher (45, 145, 445, 587, 592) bewegungsgekoppelt ist, um von der Wärmekraftmaschine (25, 125, 425, 571, 575) mechanische Energie auf den Verbraucher (45, 145, 445, 587, 592) zu übertragen, wobei die Heizeinrichtung wenigstens einen mit dem heißen Abgas einer Wärmekraftmaschine (25, 125, 425, 571, 575) beaufschlagten Wärmetauscher (19, 27, 139, 419, 591, 607) enthält, der dem heißen Abgas Wärme entzieht, um damit der Trocknerkabine zugeführte Zuluft zu erhitzen, **dadurch gekennzeichnet, dass** der Wärmekraftmaschine (25, 125, 425, 571, 575) durch eine Brenngasleitung (447) aus einer Mischkammer (477), die über ein Leitungssystem mit Ventilen (495, 497) mit einem Absaugsystem (489) für Luft einer Lackieranlage (400) mit einer Lackierkabine (483) für das Beaufschlagen von Fahrzeugkarossen (485) mit Sprühlack verbunden ist und der Abluft aus der Trocknerkabine und von au-ßerhalb zugeführtes Brenngas zuführbar sind, für die Verbrennung wahlweise Abluft aus der Trocknerkabine oder kohlenwasserstoffhaltige Abluft aus der Lackierkabine (483) der Lackieranlage (400) oder von außerhalb in die Anlage zugeführtes Brenngas oder ein Gemisch aus von außerhalb in die Anlage zugeführtem Brenngas und Abluft aus der Trocknerkabine zugeführt wird.

## Claims

1. System (1, 101, 401, 501) having a temperature-controllable dryer cabin for heating workpieces, in particular vehicle bodies (3, 103, 403, 503), having a heating device for heating incoming air for the dryer cabin, and having a heat engine (25, 125, 425, 571, 575) which is coupled in movement terms to a consumer (45, 145, 445, 587, 592), in order to transmit mechanical energy from the heat engine (25, 125, 425, 571, 575) to the consumer (45, 145, 445, 587, 592), the heating device comprising at least one heat exchanger (19, 27, 139, 419, 591, 607) which is loaded with the hot exhaust gas of a heat engine (25, 125, 425, 571, 575) and extracts heat from the hot exhaust gas, in order in this way to heat incoming air which is fed to the dryer cabin, **characterized by** a paint system (400) with a paint booth (483) for loading vehicle bodies (485) with spray paint, which paint booth (483) has an extraction system (489) for air with a fan (491) which is connected via a line system with valves (495, 497) to a mixing chamber (477), to which the heat engine (25, 125, 425, 571, 575) is connected by way of a fuel gas line (447), it being possible for exhaust gases which are loaded with hydrocarbons from the paint booth (483), waste air from the dryer cabin and fuel gas which is fed in from outside to be fed to the mixing chamber (477), in order to operate the heat engine (425) in this way.

2. System according to Claim 1, **characterized in that** the mixing chamber (477) is connected to the dryer cabin by way of a waste air line (471), in which a gas tank (473) is arranged, into which the waste air from the dryer cabin can be fed by means of a compressor (475).

3. System according to Claim 1 or 2, **characterized in that** the heat engine is configured as a gas turbine or gas engine (425).

4. System according to one of Claims 1 to 3, **characterized in that** the consumer of mechanical energy is configured as a generator (45, 145) for the generation of electric energy for an electric consumer (10, 21, 29, 33, 110, 121, 129, 133).

5. System according to Claim 4, **characterized in that** the generator (245) is connected to a buffer store (320) for the buffer storage of electric energy.

6. System according to one of Claims 1 to 5, **characterized in that** the consumer of mechanical energy is configured as a fan (587, 589, 592) for the movement of incoming air through the dryer cabin.

7. Method for operating a system (1, 101, 401, 501) having a temperature-controllable dryer cabin for heating workpieces, in particular vehicle bodies (3, 103, 403, 503), having a heating device for heating incoming air for the dryer cabin, and having a heat engine (25, 125, 425, 571, 575) which is coupled in movement terms to a consumer (45, 145, 445, 587, 592), in order to transmit mechanical energy from the heat engine (25, 125, 425, 571, 575) to the consumer (45, 145, 445, 587, 592), the heating device comprising at least one heat exchanger (19, 27, 139, 419, 591, 607) which is loaded with the hot exhaust gas of a heat engine (25, 125, 425, 571, 575) and extracts heat from the hot exhaust gas, in order in this way to heat incoming air which is fed to the dryer cabin, **characterized in that**, for the combustion, selectively waste air from the dryer cabin or hydrocarbon-containing waste air from the paint booth (483) of the paint system (400) or fuel gas which is fed into the system from outside or a mixture of fuel gas which is fed into the system from outside and waste air from the dryer cabin is fed to the heat engine (25, 125, 425, 571, 575) through a fuel gas line (447) from a mixing chamber (477) which is connected via a line system with valves (495, 497) to an extraction system (489) for air of a paint system (400) with a paint booth (483) for loading vehicle bodies (485) with spray paint, and to which mixing chamber (477) waste air from the dryer cabin and fuel gas which is fed in from the outside can be fed.

## Revendications

1. Système (1, 101, 401, 501) comprenant une cabine de séchage à température réglable pour le chauffage de pièces, en particulier de carrosseries de véhicules (3, 103, 403, 503), avec un dispositif de chauffage pour le chauffage d'air d'admission pour la cabine de séchage et avec un moteur thermique (25, 125, 425, 571, 575), qui est couplé en mouvement avec un consommateur (45, 145, 445, 587, 592), afin de transférer de l'énergie mécanique du moteur thermique (25, 125, 425, 571, 575) au consommateur (45, 145, 445, 587, 592), dans lequel le dispositif de chauffage contient au moins un échangeur de chaleur (19, 27, 139, 419, 591, 607) alimenté avec des gaz d'échappement chauds d'un moteur thermique (25, 125, 425, 571, 575), qui soutire de la chaleur des gaz d'échappement chauds afin de chauffer avec celle-ci l'air d'admission envoyé à la cabine de séchage, **caractérisé par** une installation de peinture (400) avec une cabine de peinture (483) pour revêtir des carrosseries de véhicules (485) avec une laque pulvérisée, qui présente un système d'aspiration (489) pour l'air avec une soufflante (491), qui est raccordée par un système de conduites avec des soupapes (495, 497) à une chambre de mélange (477), à laquelle le moteur thermique (25, 125, 425, 571, 575) est raccordé par une conduite de gaz de combustion (447), dans lequel des gaz d'échappement chargés d'hydrocarbures provenant de la cabine de peinture (483), de l'air d'échappement provenant de la cabine de séchage et un gaz de combustion fourni de l'extérieur peuvent être envoyés à la chambre de mélange (477), afin de faire fonctionner le moteur thermique (425) à l'aide de ceux-ci.

2. Système selon la revendication 1, **caractérisé en ce que** la chambre de mélange (477) est reliée à la cabine de séchage par une conduite d'air d'échappement (471), dans laquelle est disposé un réservoir de gaz (473), dans lequel l'air d'échappement provenant de la cabine de séchage peut être accumulé au moyen d'un compresseur (475).

3. Système selon la revendication 1 ou 2, **caractérisé en ce que** le moteur thermique est formé par une turbine à gaz ou un moteur à gaz (425).

4. Système selon l'une quelconque des revendications 1 à 3, **caractérisé en ce que** le consommateur d'énergie mécanique est réalisé sous forme de générateur (45, 145) pour la production d'énergie électrique pour un consommateur électrique (10, 21, 29, 33, 110, 121, 129, 133).

5. Système selon la revendication 4, **caractérisé en ce que** le générateur (245) est relié à un accumulateur tampon (320) pour accumuler de l'énergie électrique.

6. Système selon l'une quelconque des revendications 1 à 5, **caractérisé en ce que** le consommateur d'énergie mécanique est réalisé sous forme de soufflante (587, 589, 592) pour le déplacement d'air d'admission à travers la cabine de séchage.

7. Procédé de fonctionnement d'un système (1, 101, 401, 501) comprenant une cabine de séchage à température réglable pour le chauffage de pièces, en particulier de carrosseries de véhicules (3, 103, 403, 503), avec un dispositif de chauffage pour le chauffage d'air d'admission pour la cabine de séchage et avec un moteur thermique (25, 125, 425, 571, 575), qui est couplé en mouvement avec un consommateur (45, 145, 445, 587, 592), afin de transférer de l'énergie mécanique du moteur thermique (25, 125, 425, 571, 575) au consommateur (45, 145, 445, 587, 592), dans lequel le dispositif de chauffage contient au moins un échangeur de chaleur (19, 27, 139, 419, 591, 607) alimenté avec les gaz d'échappement chauds d'un moteur thermique (25, 125, 425, 571, 575), qui soutire de la chaleur des gaz d'échappement chauds afin de chauffer avec celle-ci l'air d'admission envoyé à la cabine de séchage, **caractérisé en ce que** l'on envoie au moteur thermique (25, 125, 425, 571, 575) pour la combustion au choix de l'air d'échappement provenant de la cabine de séchage ou de l'air d'échappement contenant des hydrocarbures provenant de la cabine de peinture (483) de l'installation de peinture (400) ou du gaz de combustion fourni de l'extérieur dans le système ou un mélange de gaz de combustion fourni de l'extérieur dans le système et d'air d'échappement provenant de la cabine de séchage, par une conduite de gaz de combustion (447) à partir d'une chambre de mélange (477), qui est raccordée par un système de conduites avec des soupapes (495, 497) à un système d'aspiration (489) pour l'air d'une installation de peinture (400) avec une cabine de peinture (483) pour le revêtement de carrosseries de véhicules (485) avec une laque pulvérisée et à laquelle de l'air d'échappement provenant de la cabine de séchage et du gaz de combustion fourni de l'extérieur peuvent être envoyés.
